# EUROPEAN PATENT APPLICATION

(11) **EP 2 869 378 A1**
(43) Date of publication of application: **06.05.2015**
(21) Application number: 13809730.8
(22) Date of filing: 14.06.2013
(51) Int. Cl.: H01M 8/04, H01M 8/00, H01M 8/12

(54) **SOLID OXIDE FUEL CELL SYSTEM**

(30) Priority: 29.06.2012 JP 2012147590
(71) Applicant: JX Nippon Oil & Energy Corporation, Chiyoda-ku Tokyo 100-8162 (JP)
(72) Inventor: INOUE, Kazuhiro, Tokyo 100-8162 (JP); NISHIYAMA, Takuo, Tokyo 100-8162 (JP)
(74) Representative: Grünecker Patent- und Rechtsanwälte PartG mbB
(86) International application number: PCT/JP2013/066490
(87) International publication number: WO 2014/002801

(57) **Abstract**

A suitable control in a system provided with a solid oxide fuel cell 1 at the time of paralleling-off from a grid power source 6 and switching to an autonomous operation, is provided. The generated electric power of the solid oxide fuel cell 1 during the autonomous operation is set to a constant electric power (500 W or the like), and when the total load electric power of the system exceeds the constant electric power (500 W or the like), the electric power supply to the external load connected to an autonomous dedicated outlet 17 is stopped for a predetermined period of time. The external load electric power is adjusted during the stop to reduce the total electric power load to be equal to or less than the constant electric power, and the electric power supply is resumed after the predetermined period of time has elapsed.

## Description

### TECHNICAL FIELD

The present invention relates to a solid oxide fuel cell system provided with a solid oxide fuel cell (SOFC) capable of generating power with high efficiency by power generation at a relatively high temperature using a solid oxide electrolyte membrane as an electrolyte, and particularly relates to a solid oxide fuel cell system capable of performing a grid interconnection operation by interconnection with a grid power source and an autonomous operation by paralleling-off from the grid power source.

### BACKGROUND ART

Patent Document 1 discloses an emergency response fuel cell system.

This can be used by connecting a power supply due to a distributed power generation adjacent to an electric power demand location to a commercial power source, and can perform an autonomous operation and an autonomous startup even when disconnected from the commercial power source. Thus, the system is configured so that the electric power can be supplied to the household while avoiding a short circuit accident at the time of a disaster or the like, and a safe operation can be performed by properly consuming surplus electric power due to variations in the household power consumption.

In Patent Document 1, the electric power supply to the household is performed by varying electric power thereof according to the external load electric power during an autonomous operation. In this case, since it is difficult to perform the power generation in response to changes in the household power consumption, electric power in excess of that consumed by the household is generated, and the surplus electric power is properly consumed by a load device.

### REFERENCE DOCUMENT LIST

### PATENT DOCUMENT

Patent Document 1: Japanese Patent Application Laid-open Publication No. 2007-179886

### SUMMARY OF THE INVENTION

### PROBLEMS TO BE SOLVED BY THE INVENTION

However, in practice, since it is difficult to always generate electric power greater than the external load electric power in the fuel cell, there has been room for improvement in this respect.

The present invention has been made in view of the problems of the related art, and an object thereof is to provide a fuel cell system capable of securing the required electric power even at the time of power failure by the proper control at the time of the autonomous operation, without increasing the size of the system.

### MEANS FOR SOLVING THE PROBLEMS

For this reason, according to the present invention, there is provided a solid oxide fuel cell system provided with a solid oxide fuel cell that generates power through an electrochemical reaction between a fuel and an oxidant, a power conditioner provided on an output side of the fuel cell, and a control device that controls the fuel cell and the power conditioner and is capable of switching a grid interconnection operation by interconnection with a grid power source and an autonomous operation by paralleling-off from the grid power source, the control device including a total load electric power sensing unit that measures a total load electric power of the system during the autonomous power generation, a generated electric power constant control unit that controls the generated electric power of the fuel cell to a predetermined constant value during the autonomous operation, and an electric power supply stop unit that stops the electric power supply to an external load connected to the system for a predetermined period of time, when the total load electric power during the autonomous power generation exceeds the constant value.

### EFFECTS OF THE INVENTION

According to the present invention, the generated electric power of the system is controlled to a constant generated electric power. When the total load electric power exceeds the constant electric power, the electric power supply is stopped for a predetermined period of time, while the electric power supply is adjusted to the electric power consumption that is actually required during power failure, so that it is possible to resume the electric power supply after the predetermined time passes.

Thus, at the time of temporary power failure, it is not necessary to increase the system power generation capacity to always generate power greater than the electric power consumption of the external load, and it is possible to secure the electric power supply in a practically reasonable manner, while suppressing a cost increase associated with an increase in size of the system, and an increase in power generation capacity.

### BRIEF DESCRIPTION OF THE DRAWINGS

FIG. 1 is a configuration diagram of a solid oxide fuel cell system according to an exemplary embodiment of the present invention.
FIG. 2 is a timing diagram when the system starts up from a stopped state to perform an autonomous operation constant electric power control.
FIG. 3 is a timing diagram when the system lowers an output electric power from a high-power operating condition to perform an autonomous operation constant electric power control.
FIG. 4 is a flowchart of a mode switching control.
FIG. 5 is a flowchart of an autonomous operation mode.
FIG. 6 is a timing diagram illustrating a state in which the external load electric power exceeds a constant electric power during the autonomous operation constant electric power control.

### MODE FOR CARRYING OUT THE INVENTION

Hereinafter, an embodiment of the present invention will be described in detail.

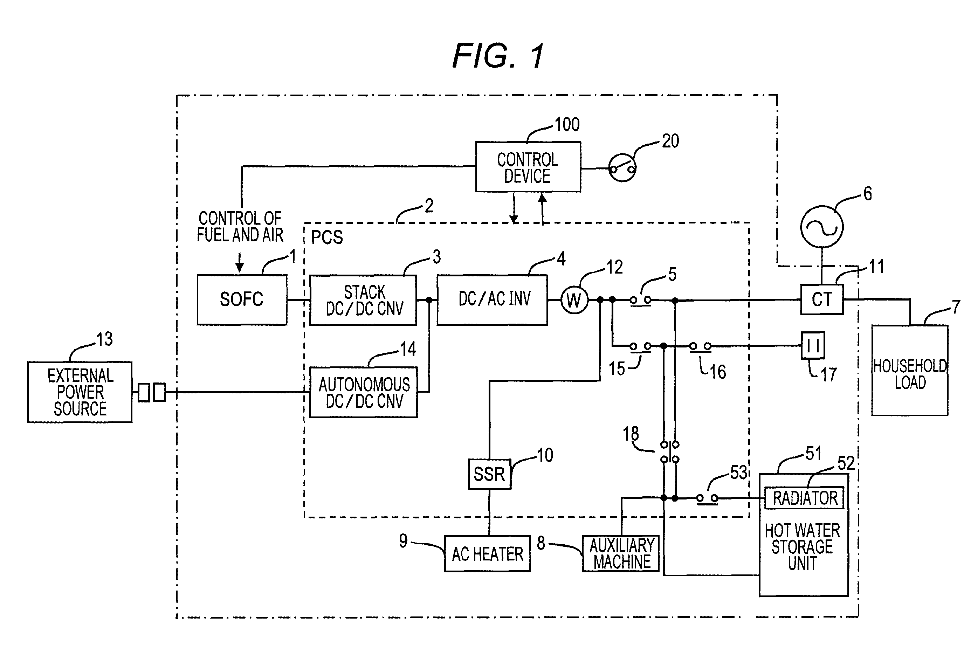

FIG. 1 is a configuration diagram of a solid oxide fuel cell system according to an embodiment of the present invention.

The solid oxide fuel cell system of this embodiment includes a solid oxide fuel cell (SOFC) 1, a power conditioner (PCS) 2, and a control device 100.

The solid oxide fuel cell (SOFC) 1 is an assembly (cell stack) of a plurality of solid oxide fuel cells. Each fuel cell has a fuel electrode (anode), an oxidizer electrode (cathode), and an electrolyte layer disposed between these electrodes. The fuel electrode is supplied with hydrogen-containing fuel, and the oxidizer electrode is supplied with air (oxygen) as an oxidant.

Therefore, by supplying hydrogen to the fuel electrode on one end side of the electrolyte layer, and by supplying oxygen to the other end side of the electrolyte layer, the solid oxide fuel cell (SOFC) 1 generates the electric power (generates DC electric power) by an electrochemical reaction between hydrogen and oxygen. Since the solid oxide fuel cell (SOFC) 1 having the electrolyte layer formed by a solid oxide electrolyte membrane generates the power at a relatively high temperature, power generation is possible at high efficiency, and is particularly excellent for household use.

Note that, in general, a fuel reforming device is used for supplying the hydrogen-containing fuel to the fuel electrode, but this is not illustrated. The fuel reforming device reforms the hydrocarbon-based fuel (for example, city gas, LPG, kerosene, methanol, biofuel or the like) using a reforming catalyst, by a steam reforming reaction, a partial oxidation reaction, an autothermal reforming reaction or the like, thereby producing a hydrogen-rich reformed gas. Furthermore, in the solid oxide fuel cell system, when using the fuel reforming device, since it is not necessary to remove CO in the reformed gas, there is an advantage in that the device is simplified and it is possible to use CO for power generation. Note that, in a case in which fuel (for example, a pure hydrogen gas, a high concentration hydrogen gas, a hydrogen absorbing agent or the like) that does not require a reforming process is used as fuel, it is possible to omit the fuel reforming device.

A power conditioner 2 is configured to extract the DC electric power generated by the fuel cell 1 and convert the DC electric power into AC electric power. Therefore, the power conditioner 2 includes a DC/DC converter 3 that extracts the DC electric power generated by the fuel cell 1, and a DC/AC inverter 4 that converts the DC electric power into the AC electric power in a subsequent stage.

An output side of the power conditioner 2 (an output side of the DC/AC inverter 4) is connected to a grid power source 6 and a household load 7 via a grid interconnection relay 5.

Therefore, at the time of grid interconnection (during turning on the grid interconnection relay 5), the generated electric power of the fuel cell 1 is supplied to the household load 7 via the DC/AC inverter 4, and when the generated electric power of the fuel cell 1 is less than the electric power demand of the household load 7, the grid electric power from the grid power source 6 is supplied to the household load 7 as a shortage.

Furthermore, a branch line is provided from the output side of the grid interconnection relay 5, such that electric power is supplied to various auxiliary machines 8 and a hot water storage unit 51 from the fuel cell system via a switching relay 18, which will be described below, at the time of the grid interconnection. Furthermore, a radiator 52 disposed in the hot water storage unit 51 is also adapted to be driven via a relay 53. The auxiliary machine 8 includes a device (such as a pump, and a heater) that drives a fuel reforming device and an air supply device, which are not illustrated.

In addition, a surplus electric power heater 9 as a load device for surplus electric power consumption is connected to the power conditioner 2. As the surplus electric power heater 9, either of a DC heater or an AC heater may be adopted, but the AC heater is described as an example herein. The surplus electric power heater (AC heater) 9 is connected to the output side of the DC/AC inverter 4 via a solid state relay (SSR) 10. In the solid oxide fuel cell system having the fuel reforming device, in general, the consumption of surplus electric power is carried out by combusting surplus hydrogen (and CO) equivalent to the surplus electric power in a combustion chamber of the fuel reforming device. However, in order to precisely perform the generated electric power constant control in an autonomous operation, which will be described below, since it is necessary to accurately control the combustion chamber temperature, such control is substantially difficult. Therefore, the surplus electric power heater 9 is provided to precisely perform the generated electric power constant control. In addition, it is needless to say that the surplus electric power heater 9 can also be used even when consuming the surplus electric power to prevent a reverse power flow in a case in which the generated electric power of the fuel cell 1 exceeds the electric power demand in the household load 7 during the grid interconnection. In addition, the surplus electric power heater 9 is used to convert the surplus electric power into heat and to warm the water (hot water) in the hot water storage tank of the hot water storage unit 51. However, the heat utilization is not limited thereto.

The control device 100 is constituted by a microcomputer, and has a CPU, a ROM, a RAM, an input and output interface or the like. During the grid interconnection, the control device 100 controls the generated electric power of the fuel cell 1 depending on the electric power demand of the household load 7, and controls the power conditioner 2 (the DC/DC converter 3, the DC/AC inverter 4, the solid state relay 10 or the like) in accordance with the control of the generated electric power of the fuel cell 1. Note that, the data can be transmitted and received between the control device 100 and the power conditioner 2.

In detection of the electric power demand of the household load 7, an electric power measuring device (current transformer) 11 configured to measure the electric power supplied to the household load 7 from the grid power source 6, and an electric power measuring device 12 configured to measure the electric power to be supplied to the household load 7 from the power conditioner 2 are used.

Control of the electric power generated by the control device 100 is performed by controlling an amount of supply of fuel and air to the fuel cell 1. Since the fuel reforming device is provided in many cases, the control of the amount of fuel supply is performed by controlling the amount of fuel supplied to the fuel reforming device.

Thus, the control device 100 controls the generated electric power of the fuel cell 1, by controlling the amount of supply of fuel and air, according to a target value of the generated electric power of the fuel cell 1 that is set depending on the electric power demand of the household load 7 (so as to satisfy the target value of the generated electric power).

Furthermore, the control device 100 controls the power conditioner 2 parallel to the control of the generated electric power of the fuel cell 1. Specifically, the control device sets and controls the current extracted from the fuel cell 1, based on the target value of the generated electric power of the fuel cell 1. More particularly, the target value of the generated electric power of the fuel cell 1 is divided by the output voltage of the fuel cell 1 to set the current target value, and the current (sweeping current) extracted from the fuel cell 1 is controlled in accordance with the current target value.

The solid oxide fuel cell system according to the present embodiment is able to perform the grid interconnection operation by interconnection with the grid power source 6, and the autonomous operation (grid paralleling-off operation) by paralleling-off from the grid power source 6.

In order to enable the autonomous operation, the external power source 13 can be connected to the power conditioner 2. As the external power source 13, for example, an automobile battery (DC 12 V) is assumed. For this reason, a dedicated DC/DC converter 14 is provided on the input side of the DC/AC inverter 4 in the power conditioner 2 to be parallel with the DC/DC converter 3, and it is possible to connect the external power source 13 to the input side of the DC/DC converter 14 via a suitable connector. By enabling the external power source 13 to be connected in this way, it is possible to manage cases in which start-up of the fuel cell 1 is required for the autonomous operation, such as a case in which a power failure occurs during power generation stop of the fuel cell 1.

The power conditioner 2 is provided with an autonomous output line L2 leading to an autonomous dedicated outlet 17 from the DC/AC inverter 4 via the autonomous startup relay 15 and the autonomous output relay 16, as an output line at the time of autonomous operation, apart from a grid interconnection line L1.

Furthermore, a branch line is provided from a connection point between the autonomous startup relay 15 and the autonomous output relay 16, such that the electric power is supplied to the various auxiliary machines 8 and the hot water storage unit 51 of the fuel cell system via the switching relay 18 during the autonomous operation.

A signal from the operation mode switching switch 20 is input to the control device 100. The operation mode switching switch 20 is able to instruct the transition to the autonomous operation from the grid interconnection operation during power failure or the like, and is able to instruct the transition to the grid interconnection operation from the autonomous operation during power recovery, by the operation of the user. Therefore, the control device 100 is capable of switching the grid interconnection operation by the interconnection with the grid power source 6, and the autonomous operation by paralleling-off from the grid power source 6, depending on the command of the operation mode switching switch 20. In other words, the mode switching between the grid interconnection operation and the autonomous operation is not automatically performed, and the operation mode switching switch 20 needs to be operated by the user.

Furthermore, for the control during the autonomous operation, in the power conditioner 2, the electric power measuring device 12 measures the total load electric power supplied from the power conditioner 2 (the electric power consumption of the total load including the auxiliary machine 8, the hot water storage unit 51, and the surplus electric power heater 9, and the external load electric power supplied to the autonomous dedicated outlet 17), and information thus obtained is transmitted to the control device 100.

When switching to the autonomous operation mode from the grid interconnection operation mode during power failure or the like, the external power source 13 is connected as needed, and the operation mode switching switch 20 is operated to the autonomous operation mode side (for example, "turned on").

Thus, the control device 100 turns off the grid interconnection relay 5 to perform paralleling-off from the grid power source 6, and turns on the autonomous startup relay 15 and the autonomous output relay 16 to switch the operation into the autonomous operation. Furthermore, the electric power supply line to the auxiliary machine 8 is also switched by the switching relay 18.

It is possible to supply the generated electric power of the fuel cell 1 to the autonomous dedicated outlet 17 by switching to the autonomous operation, thereby actuating various external loads (not illustrated) connected thereto.

Note that, when detecting a power failure during operation of the grid power source 6, the fuel cell system is configured to enter a standby state for a predetermined time (for example, 15 minutes), and it is possible to perform the smooth transition to the autonomous operation within the standby time.

At the time of transition to the autonomous operation, when the fuel cell 1 is stopped, there is a need to start up the fuel cell 1. In this case, only the autonomous startup relay 15 is turned on (the autonomous output relay 16 is turned off) to start up the fuel cell 1, while driving the auxiliary machine 8 by the external power source 13. Moreover, by turning on the autonomous output relay 16 after the startup, the generated electric power of the fuel cell 1 is supplied to the autonomous dedicated outlet 17.

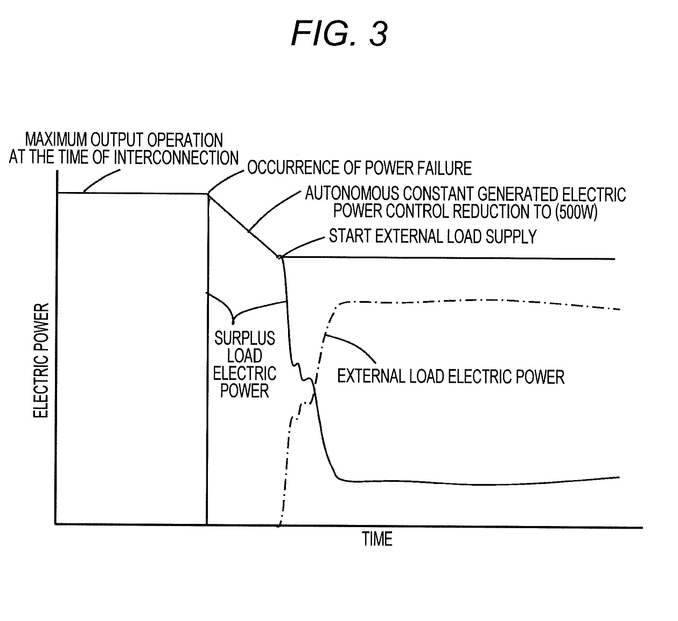

In the autonomous operation mode, the control device 100 controls the generated electric power of the fuel cell 1 to a predetermined constant electric power, for example, 500 W (with respect to the rated output of 700 W). Therefore, if the fuel cell 1 is in operation during the transition, the generated electric power is converged to 500 W. When the electric power is reduced to 500 W from the state in which the electric power is greater than 500 W at this time, as illustrated in FIG. 3, after the electric power is reduced to 500 W, the electric power supply to the autonomous dedicated outlet 17 starts. Here, if the electric power supply starts during reduction of the electric power, the amount of electric power supply may be insufficient for the external load, the amount of the electric power supply may be unexpectedly insufficient, and there is a possibility that operation of the stable external load cannot be maintained. Such insufficient electric power supply in the constant electric power supply state typically occurs in a case in which the external load electric power is too large from the beginning, or in a case in which a new external load is used. Thus, since a user can recognize the possibility of insufficient electric power in advance, it is possible to avoid such unexpected situations.

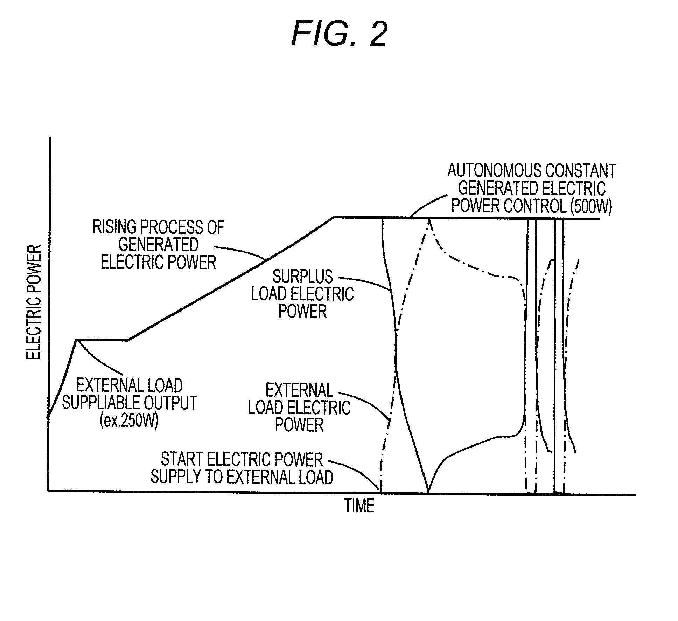

When the electric power increases to 500 W from the state less than 500 W, the electric power supply to the autonomous dedicated outlet 17 from about 250 W starts. Meanwhile, if the fuel cell 1 stops during the transition, as illustrated in FIG. 2, the fuel cell 1 starts up and the electric power is increased to 500 W. In this case, at the time when increasing to 250 W after starting the start-up, the electric power supply to the autonomous dedicated outlet 17 starts.

In a case of increasing the generated power in this way, by setting the supply startup electric power to be less than a fixed output, it is possible to reduce the standby time from the power failure to the electric power supply start as much as possible, thereby promptly securing the minimum electric power.

In the autonomous operation mode described above, during power generation of a constant electric power (500 W), the surplus electric power (= "generated constant electric power" - "external load electric power") exceeding the external load electric power is basically consumed by the surplus electric power heater 9 as a load device. Alternatively, the surplus electric power is consumed using a radiator 52 within the hot water storage unit 51, instead of the surplus electric power heater 9 or in combination with the surplus electric power heater 9 under predetermined conditions.

In the autonomous operation mode, when the external load electric power exceeds a predetermined generation power, that is, in the case of overload, in principle, the electric power supply to the external load is stopped. That is, the autonomous output relay 16 is turned off to stop the electric power supply to the autonomous dedicated outlet 17. The power generation of constant electric power (500 W) continues even at this time, and all the surplus electric power is consumed by the surplus electric power heater 9 and the like.

After stopping the electric power supply, after a predetermined time set in advance (for example, 30 seconds), the autonomous output relay 16 is turned on again to resume the electric power supply to the autonomous dedicated outlet 17.

Moreover, the load state is checked again after restarting the electric power supply, if there is a proper load, the electric power supply continues, but if there is an overload, the electric power supply is stopped again for a predetermined time (30 seconds). This predetermined time (30 seconds) is the standby time at which it is expected that a user reduces the load.

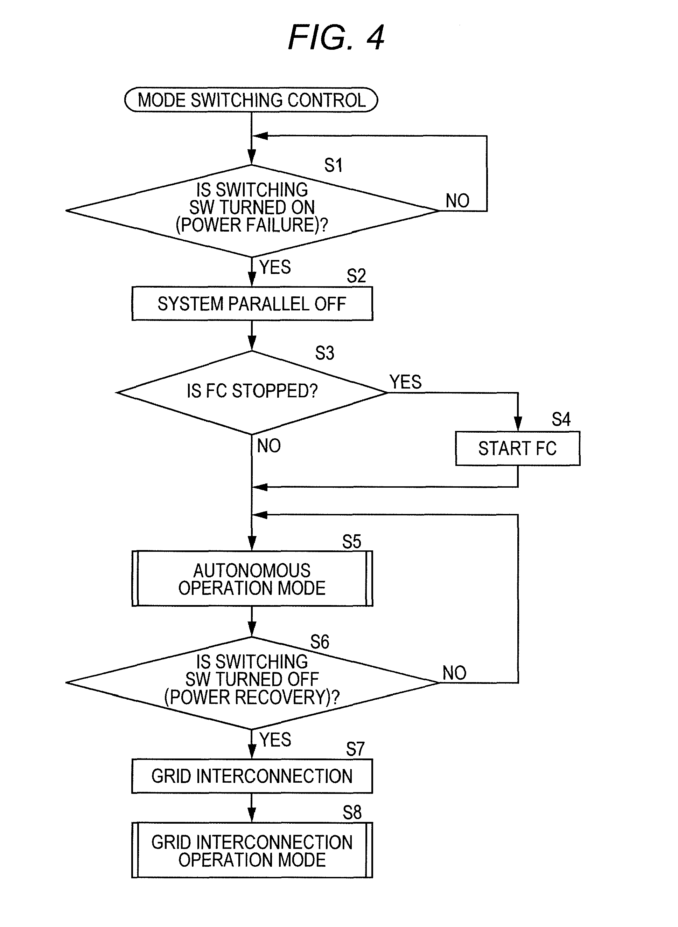

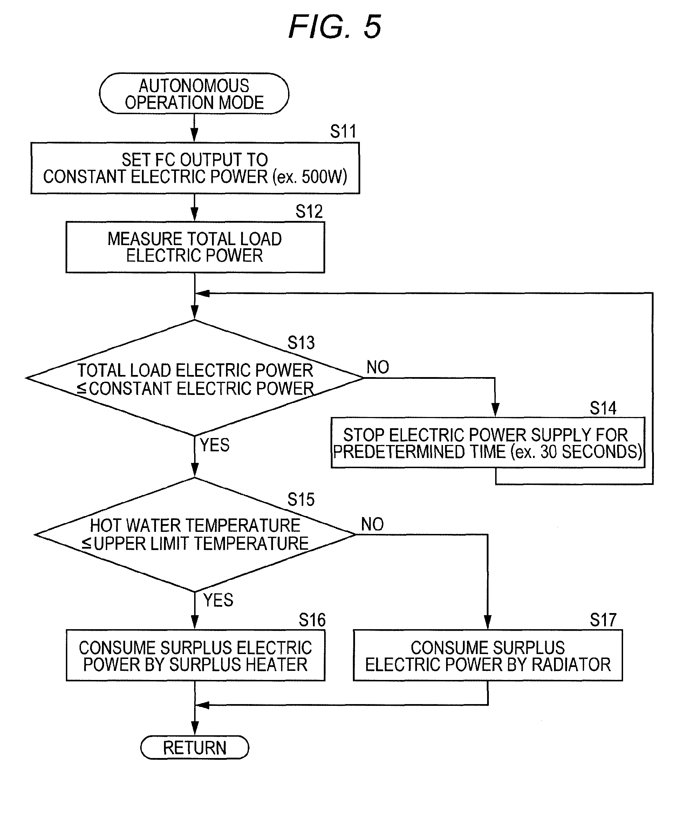

Next, the flow of control will be described with reference to the flowcharts of FIGS. 4 and 5.

FIG. 4 is a flowchart of the mode switching control executed by the control device 100. Note that, an initial state is assumed to be a grid interconnection operation mode.

At S1, it is determined whether or not the operation mode switching switch 20 is turned on due to power failure or the like, and when the switch is turned on, the process proceeds to S2.

At S2, a grid paralleling-off is executed. At the next S3, it is determined whether or not the fuel cell (FC) 1 is stopped, and if the fuel cell is stopped, the process proceeds to S4 to start up the fuel cell 1. If the fuel cell 1 is in operation, or if the startup of the fuel cell 1 is completed, the process proceeds to the autonomous operation mode of S5.

Thereafter, it is determined whether or not the operation mode switching switch 20 is turned off due to the power recovery or the like at S6, and when the switch is turned off, the process proceeds to S7.

At S7, the grid interconnection is executed. Moreover, the process goes back to the grid interconnection operation mode of S8.

FIG. 5 is a flowchart of the autonomous operation mode executed by the control device 100.

At S11, the generated electric power is fixed to a predetermined constant electric power, for example, to 500 W, the electric power is supplied to the external load, and the surplus electric power is set to be consumed by the surplus electric power heater 9 or the like. The generated electric power constant control unit is performed by a control sequence of setting the target generated electric power to the constant level (500 W), and this function corresponds to the generated electric power constant control unit.

At S12, the total load electric power is measured by the electric power measuring device 21. The total load electric power measuring function of this electric power measuring device 21 is equivalent to the total load electric power sensing unit.

At S13, it is determined whether the total load electric power is below a constant electric power (500 W) as the generated electric power, when it is kept below the constant electric power, the process proceeds to S15.

If it is determined that the total load electric power exceeds the constant electric power, based on the determination of the overload, the autonomous output relay 16 is turned off at S14, so that the electric power supply to the autonomous dedicated outlet 17 is stopped. The function of stopping the electric power supply to the external load for a predetermined period of time when the external load electric power supply exceeds the constant value corresponds to the electric power supply stop unit. Next, the process proceeds to S15.

At S15, it is determined whether the temperature of the hot water of the hot water storage tank is maintained below an upper limit temperature.

If it is determined that the temperature of hot water is maintained below the upper limit temperature, the surplus electric power is consumed only by the surplus electric power heater 9 at S16.

Meanwhile, if it is determined that water temperature in the hot water storage tank exceeds the upper limit temperature, for suppressing the overheating of hot water, the relay 53 is turned on, so that the hot water cooling radiator 52 of the hot water storage unit 51 is driven to consume the surplus electric power. Specifically, the surplus electric power is consumed by driving an electric pump for circulating the hot water in the radiator 52 or an electric fan for blowing air to the fins of the radiator 52. In addition, the driving of the surplus electric power heater 9 may be switched to the driving of the radiator 52, or alternatively, the surplus electric power may be consumed using the combination thereof. In this way, by using the radiator 52 as the surplus electric power consumption, it is possible to consume the surplus electric power without overheating the hot water.

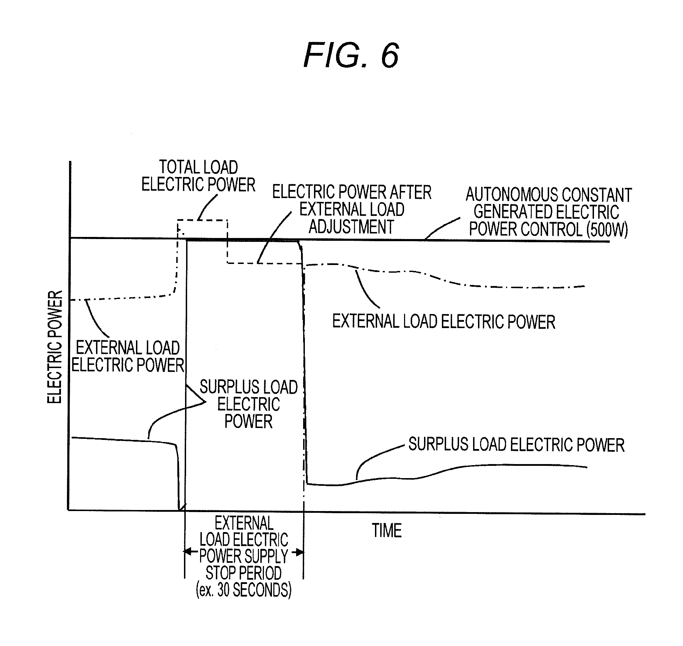

FIG. 6 illustrates a state in which the total load electric power exceeds a constant electric power during the autonomous operation constant electric power control.

Thus, if the generated electric power is set to a relatively large value such as 500 W during the autonomous operation, for example, if the system electric power consumption (total load electric power) when using a TV, a refrigerator, and a fluorescent lamp as an external load is 300 W, even in the case of a power failure, it is possible to maintain the state of use before the power failure. In addition to this, in a case in which the electric power consumption of the air conditioner is below 200 W, it is possible to maintain the state of use, even when using the air conditioner.

Meanwhile, if the electric power consumption of the air conditioner is 250 W and the system electric power consumption (total load electric power) exceeds 500 W, the electric power supply is stopped once, and in this period, a user can stop the use of the load including the air conditioner and keep the load determined as a required minimum, and then, the electric power supply can be resumed.

In this way, according to the above-described control, at the time of temporary power failure, it is not necessary to increase the system power generation capacity so as to always generate more electric power than the electric power consumption of the external load, it is possible to secure the required electric power, while suppressing cost increase associated with increased size of the system, and an increase in power generation capacity, and a realistic, reasonable electric power supply function can be obtained.

Furthermore, as can also be appreciated from FIG. 2 (constant electric power control unit of FIG. 2) and FIG. 6, it is possible to maintain the constant electric power by consuming the surplus electric power with good responsiveness by the surplus electric power heater 9 or the like, even with a sudden change in external load during the constant electric power control.

Note that, in the above description, the control device 100 is provided independently from the power conditioner 2, but a part of the control function may be shared with the controller of the power conditioner 2, and the operation may be controlled in cooperation. Alternatively, the control device 100 itself may be housed and disposed within the housing of the power conditioner 2.

In addition, in the above description, numerical values of the generated electric power, the electric power supply stop time or the like have been given, but these are to facilitate understanding and are not intended to limit the numerical values.

Furthermore, it is a matter of course that the shown embodiment is only intended to illustrate the present invention, and in addition to those directly shown by the described embodiments, the present invention includes various improvements and modifications that can be made by one skilled in the art within the scope of the claims.

### REFERENCE SYMBOL LIST

- 1: Solid oxide fuel cell (SOFC)
- 2: Power conditioner
- 3: DC/DC converter
- 4: DC/AC inverter
- 5: Grid interconnection relay
- 6: Grid power source
- 7: Household load
- 8: Auxiliary machine
- 9: Surplus electric power heater (AC heater)
- 10: Solid state relay
- 11: Electric power measuring device
- 12: Electric power measuring device
- 13: External power source
- 14: External power supply DC/DC converter
- 15: Autonomous startup relay
- 16: Autonomous output relay
- 17: Autonomous dedicated outlet
- 18: Switching relay
- 20: Operation mode switching switch
- 51: Hot water storage unit
- 52: Radiator
- 53: Relay

## Claims

1. A solid oxide fuel cell system comprising: a solid oxide fuel cell that generates electric power through an electrochemical reaction between a fuel and an oxidant; a power conditioner provided on an output side of the fuel cell; and a control device that controls the fuel cell and the power conditioner and is capable of switching a grid interconnection operation by interconnection with a grid power source and an autonomous operation by paralleling-off from the grid power source,
wherein the control device comprises
a total load electric power sensing unit that measures a total load electric power of the system during the autonomous operation,
a generated electric power constant control unit that controls the generated electric power of the fuel cell to a predetermined constant value during the autonomous operation, and
an electric power supply stop unit that stops the electric power supply to an external load connected to the system for a predetermined period of time during the autonomous operation, when the total load electric power during the autonomous operation exceeds the constant value.

2. The solid oxide fuel cell system according to claim 1,
wherein the control device further comprises
a surplus electric power consumption unit that consumes surplus electric power exceeding an external load electric power by a surplus load when the constant value exceeds the external load electric power during the autonomous operation.

3. The solid oxide fuel cell system according to claim 1,
wherein the surplus load includes an electric power heater.

4. The solid oxide fuel cell system according to claim 1,
wherein the surplus load includes a cooler that cools hot water when a temperature of the hot water heated by an electric power heater is equal to or higher than a predetermined value.

5. The solid oxide fuel cell system according to claim 1,
wherein, when the power generation of the fuel cell during the grid interconnection operation is switched to the autonomous operation at a stopped state or at an operation state in which the generated electric power is less than the constant value, a power generation output of the fuel cell is gradually increased until reaching the constant value, and when reaching a predetermined output value that is lower than the constant value, output to the external load is allowed.

6. The solid oxide fuel cell system according to claim 1,
wherein, when a power generation output of the fuel cell during the grid interconnection operation is switched to the autonomous operation at a state in which the power generation output is greater than the constant value, the power generation output of the fuel cell is gradually reduced, and when the power generation output is reduced to the constant value, output to the external load is allowed.
